Europäisches Patentamt

European Patent Office

Office européen des brevets

(11) Publication number: **0 036 749**
**A1**

# EUROPEAN PATENT APPLICATION

(21) Application number: 81301129.3

(51) Int. Cl.³: **C 09 C 3/10, C 08 L 67/06**

(22) Date of filing: 17.03.81

(30) Priority: 21.03.80 GB 8009530

(71) Applicant: BRITISH INDUSTRIAL PLASTICS LIMITED, 20 St. Mary's Parsonage, Manchester M3 2NL (GB)

(43) Date of publication of application: 30.09.81 Bulletin 81/39

(72) Inventor: Parker, Frederick John, 43 Beacon Road Wylde Green Sutton Coalfield, West Midlands B73 5ST (GB)

(84) Designated Contracting States: **CH DE FR GB LI**

(74) Representative: Hadfield, Robert Franklin et al, 20, St. Mary's Parsonage, Manchester M3 2NL (GB)

(54) **Improvements relating to fillers for dough moulding compounds.**

(57) A filler for the manufacture of a DMC is prepared by mixing a finely divided substantially non-absorbent mineral filler with an aqueous emulsion or dispersion of a thermoplastic polymeric material. In order to prevent coagulation of the emulsion or dispersion upon mixing, the filler is treated with water before the mixing is carried out. The mixture is dried at elevated temperature to form a powder having the thermoplastic polymer homogeneously dispersed in the filler.

A dough moulding compound can be made by mixing the treated filler with unsaturated polyester resin solution glass fibre and minor amounts of other additives. Good dispersion of the thermoplastic polymeric material in the DMC is thereby obtained.

ACTORUM AG

- 1 -

Improvements relating to fillers for dough moulding
compounds

This invention relates to an improved method of
preparing the filler for use in a dough moulding
compound.

Dough moulding compounds based on, for example,
unsaturated polyester resins are well known and in
common use for moulding of components such as insulation
for electrical distribution equipment.  Their principal
ingredients are a solution of an unsaturated polyester
resin in a monomer such as styrene, chopped glass fibres
and mineral filler such as calcium carbonate.

UK Patent Specification No.936,351 describes moulding
compounds of this type which contain a solution of an
unsaturated polyester resin in a copolymerizable
monomer, a peroxide catalyst, an inhibitor, a
substantially non-absorbent powdered mineral filler and
a finely divided thermoplastic polymeric material in an
amount between 2 and 24 per cent by weight of the total
composition.

The function of the thermoplastic polymeric material is
to replace some of the powdered mineral filler and
improve the crack resistance of thick mouldings moulded
from the compound and the flow characteristics of the

0036749

compound. UK Patent Specification No.936,351 describes essentially three methods of incorporating the thermoplastic polymeric material into the compound to achieve homogeneous dispersion. One such method when mixing the compound is to mix dry the thermoplastic polymeric material and the dry powdered mineral fillers of the formulation. In this method the polymeric additive has to be finely ground. This is difficult and costly and does not achieve very intimate dispersion.

Another method is to add the thermoplastic polymeric material to the filler as a solution in an inorganic solvent, conveniently the same reactive monomer as that in which the unsaturated polyester is dissolved. This method achieves good dispersion but the undesired further addition of the reactive monomer adversely affects the flow of the compound and diminishes the quality of the final composition.

Yet another method is to mix an aqueous emulsion of the thermoplastic polymeric material with the dry powdered mineral filler in a heated mixer until the water has evaporated. By this method it is difficult to obtain uniform distribution of the thermoplastic polymeric material in the filler, particularly when the amount of the former is low, as is usual in practice. It appears that the mixing of the emulsion with the dry filler leads to coagulation of the emulsion, resulting in a lack of uniformity of distribution of the thermoplastic polymer.

The first two methods are the ones commonly used commercially, particularly the embodiment where the thermoplastic polymeric material is dissolved in a reactive monomer.

Our invention is concerned with obtaining a homogeneous dispersion of the thermoplastic polymeric material in the moulding compound by an improvement of the previously unused third method.

Thus, according to the present invention a method for the preparation of a filler for the manufacture of a dough moulding compound comprises mixing a finely divided mineral filler with an aqueous emulsion or dispersion of thermoplastic polymeric material wherein said mineral filler has intimately mixed therein, prior to its contact with said emulsion or dispersion, at least sufficient water to prevent coagulation of the aqueous emulsion or dispersion when the latter is mixed with said mineral filler and drying said mixture at an elevated temperature and forming a dry filler powder having said thermoplastic polymeric material uniformly dispersed therein.

We have found that if the emulsion or dispersion is mixed with wet filler, the hitherto unsatisfactory method of preparing the filler is improved to be superior to the others. Preferably the drying is carried out at a temperature low enough to ensure that said thermoplastic polymeric material does not become tacky. The finely divided mineral filler may be mixed with sufficient water to make a paste or thick slurry with the filler, but not so much water that when the emulsion is added the mixture becomes too runny. In some cases, however, it may be sufficient to ensure that all the particles of filler are damp, and the filler may remain a flowable powder. Water has to be dried off and is therefore to be kept to the minimum necessary to obtain the homogenous dispersion by simple mixing. Also a need for filtration is undesirable because of the potential waste of emulsified thermoplastics polymer in such a step.

The preferred mineral filler is calcium carbonate either in its natural or synthetic form since it is both suitable and cheap, but other fillers such as clay, silicates, alumina, talc and asbestos may also be used instead.

The thermoplastic polymeric material is to be one which is of a class of suitable polymers well-known in the art. Clearly which monomer is to be used in the dough moulding compound will determine the suitability of thermoplastic polymeric materials. In practice, however, styrene is commonly used and polyvinyl acetate is a particularly suitable polymer. In the present invention the thermoplastic polymeric material is used in aqueous dispersion or emulsion and any polymer can be used which is compatible with the monomer to be present in the dough moulding compound and is also available as the necessary aqueous emulsion or dispersion.

The solids content of the aqueous emulsion or dispersion used is preferably as high as possible, to reduce the amount of water to be evaporated, while retaining the facility of mixing to a homogeneous mass with the filler. The usual range will be 30 to 75% solids but this is not essential.

The minimum amount of water required in the mineral filler to make a paste will depend on the absorption characteristics of the filler chosen and these vary very considerably. Generally a range from 10% by weight up to about 40% by weight will embrace most examples. Clearly the amount of water in the filler is preferably to be kept to a minimum to avoid unnecessary drying costs.

In the preparation of finely divided mineral fillers such as powdered calcium carbonate the grinding of the filler to size may be carried out in aqueous slurry, the wet filler then being filtered off. The wet filler cake is a thick pasty mass which may if desired, be used as the wet filler in the present invention.

The drying of the mixed thermoplastic polymeric material and filler can be accomplished by conventional means such as agitation in a heated mixer, or in an oven, and the dried material may be reground.

In the dried filler the proportion of the thermoplastic as polymeric material to filler will be made to suit the final formulation of the dough moulding compound. Thus in Example 1 below, a required 59.5 p.b.w. of calcium carbonate with 3 p.b.w. of the thermoplastic polymeric material in the dough moulding compound will make it desirable, for example, to prepare the treated filler with the same proportion of thermoplastic polymeric material filler in order that the treated filler can be used directly in the preparation of the dough moulding compound.

Alternatively the treated filler may be made with a higher proportion of thermoplastic polymeric additive, and used as a masterbatch, additional untreated filler being added to it during preparation of the dough moulding compound.

Other ingredients of a dough-moulding compound may be added to the filler with the thermoplastic polymeric material if desired. Preferred examples of such ingredients are surfactants and flame retardants (e.g. alumina trihydrate) which could with advantage be homogeneously dispersed in the filler.

The invention will now be described in more detail, by way of Example only.

Example I

Dough moulding compounds of comparable composition were prepared by three different routes. In the first route a polyvinyl acetate powder was mixed dry with the filler, calcium carbonate, and in the second route polyvinyl acetate as a 50% solution in styrene was added to the other ingredients of the composition. These two routes are the ones in commercial use.

In the third route 2975g of calcium carbonate filler ("Millicarb' commercially available from Plastichem Limited) was made into a thick slurry or paste by mixing with 1275g of water and 9g of dispersing agent, and 300g of a 50% solids aqueous emulsion of polyvinyl acetate (9300 grade commercially available from Vinyl Products Ltd.) were added and stirred until evenly dispersed. The slurry was then dried in an oven and reground using a hammer mill and then a ball mill. This product - the treated filler - was then mixed with 100q of calcium stearate in a sigma bladed mixer. 1075g of a 66% solids solution of an unsaturated polyester resin in styrene, catalysed with 1.5% of t-butyl perbenzoate and inhibited with 0.2% of hydroquinone, were added to the treated filler and mixed until the filler was homogeneously dispersed, and finally 700g of 6mm glass fibre was added and mixed in for a further 2.5 minutes.

The compositions of the three dough moulding compounds are given below in Table I.

0036749

## TABLE I

| Thermoplastic added as:- | Solid Polymer | Polymer Solution | Treated Filler |
|---|---|---|---|
| | 1 | 2 | 3 |
| 6mm Glass Fibre | 14.0 pbw | 14.0 pbw | 14.0 bpw |
| Treated filler (Note 1) | - | - | 62.5 |
| Millicarb (calcium carbonate) | 59.5 | 59.5 | - |
| Calcium Stearate | 2.0 | 2.0 | 2.0 |
| Polyester resin (Note 4) | 21.5 | 18.5) ) Note | 21.5 |
| Polyvinyl acetate 50% soln. in styrene | - | ) 3<br>6.0) | - |
| Polyvinyl acetate solid (Note 2) | 3.0 | - | - |
| t-Butyl peroctoate)based 1.5% | 1.5% | 1.5% | |
| Hydroquinone )on | | | |
| inhibitor )resin 0.2% | 0.2% | 0.2% | |



Note 1 — 59.5 pbw of calcium carbonate filler with 3 pbw polyvinyl acetate.

Note 2 — Polyvinyl acetate less than 60 BS mesh size.

Note 3 — Use of styrene solution accommodated by reducing normal resin control by amount equivalent to the extra styrene added but this then gives a much higher styrene content to the whole composition.

Note 4 — Unsaturated polyester resin made from 6.6 moles propylene glycol, 5.0 moles maleic anhydride, 0.8 moles iso-phthalic acid, 0.4 moles benzoic acid (66% solids solution of resin in styrene monomer).

Mouldings were made from all three compounds, examined and tested. In the mouldings from the compounds made by using solid polyvinyl acetate there is a lack of homogeneity as evidenced by uneven gloss and colour on the surface.

Mouldings made from the compound using polyvinyl acetate in styrene solution were more homogeneous, but the extra styrene monomer thus provided made the flow inferior (lower viscosity) and this also adversely affected the surface finish.

Conversely, the compound made using the treated filler gave mouldings having a superior finish with respect to the evenness, gloss and colour.

The dry mixing of the thermoplastic polymeric material with the filler has the disadvantage that it is very difficult to obtain homogeneous dispersion. If a solution of the thermoplastic polymeric material in monomer is used there is improvement in homogeneity but there is extra monomer in the composition which cannot fully be compensated by increasing the solids content of the polyester resin solution. This extra monomer results in the dough moulding compound being slightly more tacky and having different flow characteristics during moulding, ie it is less viscous, which leads in turn to a tendency for greater porosity in mouldings produced.

Use of the filler treated as in the present invention enables a moulding compound with good homogeneous dispersion of the thermoplastic polymeric material to be made without this deterioration of the flow characteristics during moulding, and without the extra tackiness.

CLAIMS:

1. A method for the preparation of a filler for the manufacture of a dough moulding compound which comprises mixing a finely divided mineral filler intimately with an aqueous emulsion or dispersion of a thermoplastic polymeric material wherein said mineral filler has intimately mixed therein, prior to its contact with said emulsion or dispersion at least sufficient water to prevent coagulation of the aqueous emulsion or dispersion when the latter is mixed with said mineral filler, and drying said mixture at an elevated temperature, and forming a dry filler powder having said thermoplastic polymeric material uniformly dispersed therein.

2. A method according to claim 1 in which the amount of water used in said mineral filler is the minimum necessary to facilitate obtaining a homogeneous dispersion of said thermoplastic polymeric material in said filler by simple mixing.

3. A method according to claim 1 or 2 in which the amount of water in the mineral filler is in the range 10% to 40% by weight of filler.

4. A method according to claim 1, 2 or 3 in which the mineral filler is calcium carbonate.

5. A method according to any preceding claim in which the solids content of the aqueous emulsion or dispersion is in the range 30 to 75% solids.

6. A method according to any preceding claim
in which the filler is mixed with an aqueous
emulsion of polyvinyl acetate.

7. A method of making a dough moulding compound which
comprises preparing a treated filler by a method as
claimed in any preceding claim, mixing said filler
with solution of an unsaturated polyester resin in
a reactive monomer, and mixing glass fibres into
the resin solution/filler mixture so produced.

## DOCUMENTS CONSIDERED TO BE RELEVANT

| Category | Citation of document with indication, where appropriate, of relevant passages | Relevant to claim |
|---|---|---|
| X | CHEMICAL ABSTRACTS, vol. 87, no. 16, 17th October 1977, page 55, no. 118843b Columbus, Ohio, U.S.A. & JP - A - 77 72739 (MARUO CALCIUM CO., LTD.) 17-06-1977 * Abstract * | 1-5,7 |

----

**CLASSIFICATION OF THE APPLICATION (Int. Cl.³)**

C 09 C 3/10
C 08 L 67/06

**TECHNICAL FIELDS SEARCHED (Int. Cl.³)**

C 09 C 3/10
C 08 L 67/06
C 08 K 9/10
         9/04

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 25-06-1981 | DECOCKER |

EPO Form 1503.1   06.78